# EUROPEAN PATENT APPLICATION

(11) **EP 2 650 260 A1**
(43) Date of publication of application: **16.10.2013**
(21) Application number: 11847018.6
(22) Date of filing: 06.12.2011
(51) Int. Cl.: C01B 33/03, C01B 33/107

(54) **METHOD FOR DETECTING WATER LEAK, DEVICE FOR CHLOROSILANE HYDROGEN REDUCTION REACTION AND PRODUCTION METHOD USING SAID DEVICE**

(30) Priority: 10.12.2010 JP 2010275740
(71) Applicant: Tokuyama Corporation, Shunan-shi, Yamaguchi 745-8648 (JP)
(72) Inventor: WAKAMATSU, Satoru, Shunan-shi Yamaguchi 745-8648 (JP); MAJIMA, Takuya, Shunan-shi Yamaguchi 745-8648 (JP); KAMIKAWA, Takamitsu, Shunan-shi Yamaguchi 745-8648 (JP)
(74) Representative: Jackson, Martin Peter
(86) International application number: PCT/JP2011/078175
(87) International publication number: WO 2012/077677

(57) **Abstract**

To provide a method of detecting the leakage of water in a chlorosilane/hydrogen reductively reacting apparatus in which chlorosilane compounds are reacted with hydrogen, by strictly managing leakage of water in order to prevent deterioration of product quality caused by by-produced impurities and to prevent choking in the pipes while in operation to prevent serious disaster in advance. In the chlorosilane/hydrogen reductively reacting vessel comprising means for introducing chlorosilane compounds such as trichlorosilane and tetrachlorosilane and hydrogen into the reaction portion to react them to form polycrystalline silicone and for discharging gases after the reaction out of the reaction portion, and water-cooling means such as water-cooling jacket, a method of detecting the leakage of water by measuring the concentration of Si₂OCl₆ contained in the gases after the reaction relying on the gas chromatography to thereby detect the leakage of water into the reaction vessel based on a change in the measured concentration, the chlorosilane/hydrogen reductively reacting apparatus equipped with a detection device for executing the detection method, and a method of producing polycrystalline silicon by using the reaction apparatus.

## Description

### Technical Field:

This invention relates to a method of detecting the leakage of water in a chlorosilane/hydrogen reductively reacting apparatus that has water-cooling means and in which chlorosilane compounds are reacted with hydrogen, to a reaction apparatus equipped with a water leakage detection device, and to a method of producing the polycrystalline silicon by using the reaction apparatus.

### Background Art:

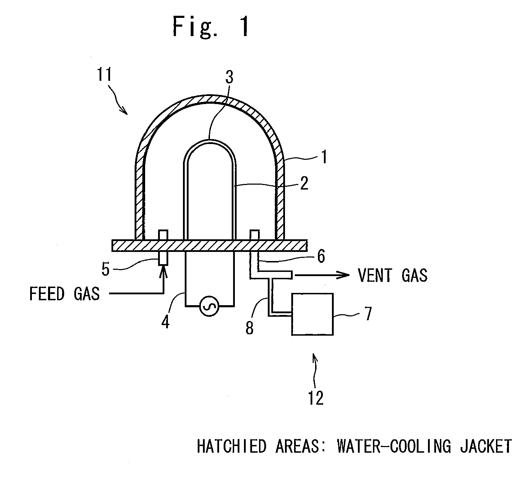

The polycrystalline silicon is an industrial material useful as a starting material for producing solar cells and semiconductor chips. A representative method of producing the polycrystalline silicon is a method (hereinafter also called Siemens method) which uses, as a reaction base member, silicon seed crystal rods (core wires) that are arranged in a reaction vessel of the bell jar type, and deposits the polycrystalline silicon on the core wires by the reductive reaction with hydrogen (Fig. 1). Concretely, an electric current is flown into the core wires to heat them at about 1,000 to about 1,100°C, and a chlorosilane compound as represented by trichlorosilane and hydrogen are introduced into the reaction vessel to react them together on the core wires.
As a novel method of producing silicon, the present inventors have also proposed a method of continuously producing silicon of a high purity (hereinafter also called melt deposition method) by introducing the chlorosilane compounds and hydrogen into a cylinder of a cylindrical reaction base member heated by a high frequency induction heating system in a reaction vessel, depositing the polycrystalline silicon on the vessel walls in the reaction base member, heating the deposited polycrystalline silicon continuously or intermittently to obtain a molten solution thereof, permitting the molten solution to fall on a recovery vessel positioned on the lower side to continuously produce the silicon of a high purity (Fig. 2; patent document 1).

In the above apparatuses for producing silicon, the reaction vessel which is probable to be exposed to high temperatures is, usually, provided with a water-cooling jacket of a structure in which the cooling water flows through the two metal walls.
According to the Siemens method, the water-cooling jacket is used because the interior of the bell jar-type reaction vessel receives radiant heat from the silicon seed crystal rods that are heated. Unless the wall surfaces are cooled down to lower than a predetermined temperature, therefore, it is probable that the metal walls are deformed and cracked, or the products are fouled with the degraded metals.
In the melt deposition method, too, the reaction vessel that contains the cylindrical reaction base member uses the water-cooling jacket for the same purpose. Further, in order to remove Joule heat from the high frequency induction heating coils when an electric current is flown, a system is often employed to flow the cooling water in the coils.

In the device of the structure in which the water flows, however, it is difficult to avoid the probability of leakage of water in the reaction due to the degradation of metals at high temperature portions that locally occurs after long periods of time and due to loosening in the connection portions where the metal members are welded together as a result of increase and decrease in the temperature.
Water that infiltrates into the reaction system quite easily reacts with the chlorosilane compounds contained in the gas after the reaction to form silica (SiO₂) and hydrogen chloride (HCl). These compounds mix into the polycrystalline silicon which is the product to lower the purity and to deteriorate the quality. Further, impurities such as phosphorus and boron in water mix into the polycrystalline silicon to spoil the value of the product. Therefore, leakage of water must be strictly prevented.
Further, the silica that is formed is a solid matter that could choke the outlet pipes of the reaction vessel. Besides, since the reaction vessel is operated at a high temperature, water that infiltrates in large amounts could become a cause of serious disaster. Therefore, it has been urged provide a detection method that is capable of quickly and reliably detecting the leakage of water in an early time of leakage of a light degree.

As a method of detecting water, there can be contrived a method that detects the leaked water itself. As described above, however, water easily reacts with the chlorosilane compounds and disappears and, therefore, cannot be detected. Further, a water-content meter and a dew-point meter which are known means for measuring the water content in a gas are prone to be quickly deteriorated if the chlorosilane compounds and hydrogen chloride are contained in the gas to be measured and, therefore, cannot take measurements maintaining stability.
On the other hand, the silica and the hydrogen chloride which are the reaction products are of such natures that the former one partly settles on the reaction vessel walls and on the exit pipes and cannot be correctly measured, and the latter one is also formed by the reaction of the desired chlorosilane compounds with hydrogen and cannot be distinguished. Therefore, neither of these compounds serves as useful objects.
In the field of producing the polycrystalline silicon, so far, a technology has been known for detecting the leakage of water by measuring the concentration of HCl in the reaction gas. With this technology, however, it is not allowed to distinguish from which one of the sources the HCL is stemming as described above when the HCL is also by-produced by the reaction in the step of production. Therefore, this method is not necessarily suited for detecting the leakage of small amounts of water in the reaction which by-produces HCl in large amounts (patent document 2).

### Patent Documents:

Patent document 1: JP-A-2002-29726
Patent document 2: Japanese Patent No. 3507842

### Outline of the Invention:

### Problems that the Invention is to Solve:

It is an object of the present invention to provide a method of detecting the leakage of water in a chlorosilane/hydrogen reductively reacting apparatus having a water-cooling means and in which chlorosilane compounds are reacted with hydrogen, by detecting water infiltrating into the reaction system due to leakage in an early time in order to prevent deterioration of product quality caused by by-produced impurities and to prevent choking in the pipes while in operation to thereby prevent serious disaster in advance, to provide a production apparatus equipped with a device for detecting the leakage of water, and to provide a method of production by using the same apparatus.

### Means for Solving the Problems:

The present invention is applied to a chlorosilane/hydrogen reductive reaction in which chlorosilane compounds react with hydrogen, and to an apparatus therefor.
As the chlorosilane compounds, there can be exemplified tetrachlorosilane, trichlorosilane, dichlorosilane and monosilane. As reactions of these compounds with hydrogen, there can be concretely exemplified a polycrystalline silicon deposition reaction based on the reaction of the trichlorosilane with hydrogen and a trichlorosilane formation reaction based on the reaction of the tetrachlorosilane with hydrogen. The polycrystalline silicon deposition method includes a chemical vapor-phase deposition method using a bell j ar-type reaction vessel (Siemens method) and a melt deposition method using a cylindrical reaction base member.
In these reactions, it was confirmed that the gas after the reaction contains chiefly hydrogen and chlorosilane compounds such as monosilane, dichlorosilane, trichlorosilane and tetrachlorosilane as well as hydrogen chloride and, further, contains chlorosilane compounds of high orders inclusive of Si₂Cl₆.

When the chlorosilane compounds are reacted with water after the above reaction, it was confirmed that silica and hydrogen chloride are representatively formed accompanied by the presence of Si₂Cl₆ and Si₂OCl₆ as reaction products. Among these compounds, further, a correlation has not been clarified yet between the detected amount of the Si₂Cl₆ and the leaked amount of water but a correlation has been found to a sufficient degree concerning the Si₂OCl₆.
Namely, after having closely studied the reaction mechanism of the chlorosilane compounds with water and the reaction products, the present inventors paid attention to the Si₂OCl₆ which is one of the reaction products, have discovered that this compound can be highly sensitively detected and has a very high correlation to the amount of leaked water, and have completed the present invention.

In the chlorosilane/hydrogen reductive reaction by introducing a feed gas containing chlorosilane compounds and hydrogen into a reaction portion formed in the reaction vessel having a water-cooling means to react them, the present invention provides a method of detecting the leakage of water by measuring the concentration of Si₂OCl₆ contained in the gas after the reaction, and detecting the leakage of water into the reaction vessel depending on a change in the measured concentration.
The method of detecting the leakage of water of the present invention can be favorably employed for:
1) The reaction in which the chlorosilane compound is a trichlorosilane and the object product of the reductive reaction is a polycrystalline silicon; and
2) The reaction in which the chlorosilane compound is a tetrachlorosilane and the object product of the reductive reaction is a trichlorosilane.

In producing a polycrystalline silicon by the reductive reaction of the chlorosilane compounds with hydrogen in a reaction portion formed in the reaction vessel having a water-cooling means, further, the present invention provides a method of producing a polycrystalline silicon by measuring the concentration of Si₂OCl₆ contained in the vent gas discharged from the reaction vessel, and detecting the leakage of water into the reaction vessel depending on a change in the measured concentration to thereby control the reductive reaction.

The present invention, further, provides a chlorosilane/hydrogen reductively reacting apparatus having therein a reaction portion in which the chlorosilane compounds are reacted with hydrogen, and comprising a feed gas feed means for feeding a feed gas that contains the chlorosilane compounds and hydrogen, a gas discharge means for discharging the gas after the reaction, and a reaction vessel having a water-cooling means, the chlorosilane/hydrogen reductively reacting apparatus further comprising a detector device for measuring the concentration of Si₂OCl₆ present in the reaction vessel or in the gas discharge means.
In the above chlorosilane/hydrogen reductively reacting apparatus of the present invention, it is desired that:
1) The gas discharge means includes a heat-insulating means or a heating means which collects part of the vent gas and holds it at not lower than 80°C to maintain it in a gaseous state, and a detector portion of the detector device that detects the concentration of Si₂OCl₆ is provided in the gaseous phase maintained in the gaseous state;
2) The gas discharge means includes a cooling means which collects part of the vent gas and cools it down to not higher than -30°C to condense it, and a detector portion of the detector device that detects the concentration of Si₂OCl₆ is provided in the condensed liquid phase obtained by the condensation; and
3) The chlorosilane compound is a trichlorosilane and the object product of the reductive reaction is a polycrystalline silicon.

### Effects of the Invention:

According to the present invention, even a very small leakage of water can be detected highly sensitively and maintaining a high correlation. As a result, infiltration of water into the reaction system due to the leakage of water can be detected at an early time and correctly. Thus, the technology of the present invention is industrially very valuable making it possible to prevent in advance a decrease in the quality of the products caused by fouling substances and by-produced impurities as well as to prevent choking of pipes during the operation and serious disasters.

### Brief Description of the Drawings:

[Fig. 1] is a schematic view of an apparatus for producing the polycrystalline silicon according to the Siemens method.
[Fig. 2] is a schematic view of a chlorosilane/hydrogen reductively reacting apparatus according to the melt deposition method.
[Fig. 3] is a schematic view of a chlorosilane/hydrogen reductively reacting apparatus according to the melt deposition method.

### Mode for Carrying Out the Invention:

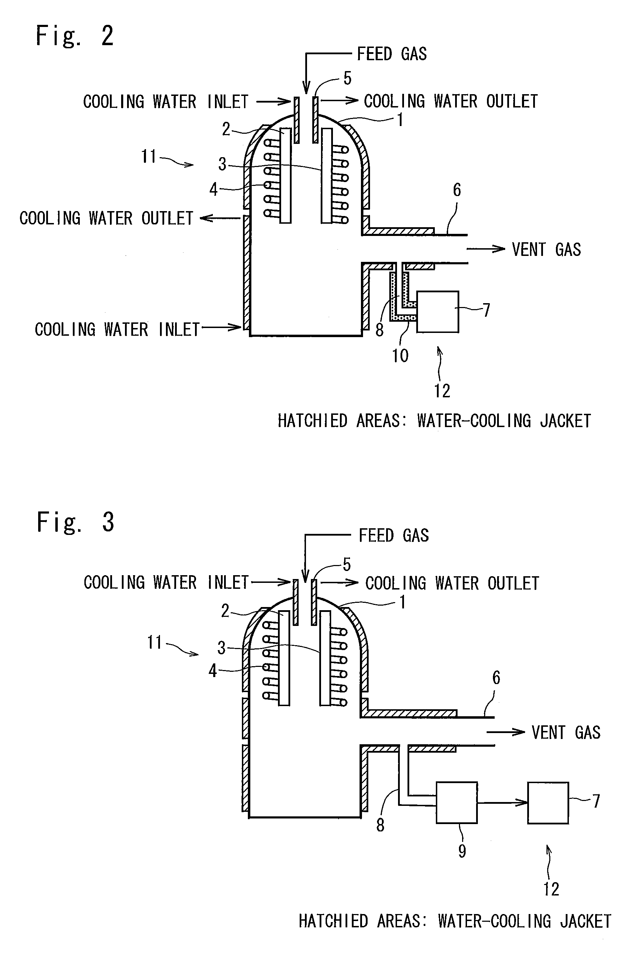

In the chlorosilane/hydrogen reductive reaction by introducing a feed gas containing chlorosilane compounds and hydrogen into a reaction portion formed in the reaction vessel having a water-cooling means to react them, the present invention provides a method of detecting the leakage of water that is leaking into the reaction vessel, provides a method of producing polycrystalline silicon by detecting the leakage of water leaking into the reaction vessel to control the reductive reaction, and provides a chlorosilane/hydrogen reductively reacting apparatus equipped with a detector device that measures the concentration of Si₂OCl₆ present in the reaction vessel or in the gas discharge means.
In the invention, the reaction vessel for reducing the chlorosilane with hydrogen will be a trichlorosilane-forming reaction vessel in which a tetrachlorosilane reacts with hydrogen to form a trichlorosilane or a silicon-forming reaction vessel in which the trichlorosilane reacts with hydrogen to deposit the silicon.
The reaction vessel for forming the silicon will concretely be a reaction vessel which is, generally, called "bell jar-type reaction vessel" and is used for forming silicon (see Fig. 1). The reaction vessel 11 of Fig. 1 includes a metallic sealed container 1 having a water-cooling means, and a reaction base member 2 consisting of silicon wires in the metallic sealed container 1. Upon flowing an electric current thereto from a power source (heating means 4) provided on the exterior, heat is generated whereby the surface of the reaction base member 2 works as a reaction portion 3, and polycrystalline silicon chemically deposits in vapor phase. Further, the metallic sealed container 1 has a feed gas feed pipe 5 that works as a gas feed means and a gas discharge pipe 6 that works as a gas discharge means for discharging the gas after the reaction out of the reaction system.
Further, the reaction vessel for forming the silicon may be a reaction vessel for forming the silicon "called melt deposition type reaction vessel" (see Fig. 2) including a metallic sealed container 1 having a water-cooling means, a cylindrical reaction base member 2 and a heating means 4 in the metallic sealed container 1, the cylindrical reaction base member 2 being heated by the heating means 4 to form a reaction portion 3 on the inner wall of the reaction base member so that the polycrystalline silicon is chemically deposited in vapor phase and the deposited polycrystalline silicon melts and drops continuously or intermittently and is recovered.

The present invention has the greatest feature in that the vent gas in the reaction vessel after the reaction is partly collected to measure the concentration of Si₂OCl₆. The structures of the reaction vessels and the structural members may be the known ones without any limitation.
The chlorosilane/hydrogen reductively reacting apparatus of the present invention includes the reaction vessel 11 and a detector device 12 for measuring the concentration of Si₂OCl₆ contained in the vent gas after the reaction.
The reaction apparatus, the method of measuring the concentration of Si₂OCl₆ and the method of producing the polycrystalline silicon will now be concretely described with reference to Fig. 2 which shows an embodiment of the chlorosilane/hydrogen reductively reacting apparatus based on the melt deposition method.

### <Reaction vessel 11 for chlorosilane/hydrogen reductive reaction>

In this embodiment, the reaction vessel for reducing the chlorosilane with hydrogen includes the metallic sealed container 1 having a water-cooling means. Here, the word sealed means that the interior is shut off from the external atmosphere. The reaction vessel in this embodiment includes:
1) A cylindrical reaction base member 2 made of carbon for forming the reaction portion 3 in which the chlorosilane and hydrogen undergo the reductive reaction;
2) The heating means 4 for heating the cylindrical reaction base member 2 made of carbon by, for example, high frequencies;
3) The feed gas feed pipe 5 which is opening from the upper part toward the lower part of the reaction portion 3 that is surrounded by the inner wall of the reaction base member; and
4) The gas discharge pipe 6 continuous to the reaction base member to discharge the gas after the reaction out of the reaction system.

### <Metallic sealed container 1>

As the material of the metallic sealed container, there can be used a steel or a stainless steel without any special limitation. In order to prevent corrosion caused by chlorosilane compounds and hydrogen chloride, further, the wall surfaces of the sealed container may be melt-injected with a metal or may be applied with a coating without any special limitation. Further, a diaphragm such as of graphite, silicon carbide or silicon nitride may be used for the portions that are likely to come into contact with the molten silicon so that the molten silicon does not come in direct contact with the metallic sealed container.
The gas after the reaction is very hot. Therefore, a thermally isolating means/structure may be provided on a portion of the inner wall surface of the metallic sealed container that could come in contact with the gas after the reaction. Concretely, it may be a structure of providing a carbon member on the inner wall portion. When the carbon member is provided on the inner wall surface, the carbon member may or may not be in contact with the inner wall surface. Desirably, for instance, the plate-like carbon member may be so provided as to cover the inner wall surface of the metallic sealed container. In order to prevent the metallic sealed container from being deformed or locally deteriorated by the heat of the high-temperature gas after the reaction or by any other factor, a cooling means such as water-cooling jacket structure is employed for the whole or part of the metallic sealed container.

### <Reaction base member 2>

In the reaction apparatus for reducing the chlorosilane with hydrogen shown in Fig. 2, the reaction base member 2 is arranged in the reaction vessel. The reaction base member 2 is a heating body and forms the reaction portion 3 in which the reaction for reducing the chlorosilane with hydrogen takes place on the surfaces of the base member and in the vicinities thereof. There is no specific limitation on the structure thereof if the chlorosilane compounds can be favorably reduced with hydrogen and, for example, the structure may be constituted by a cylindrical reaction base member as shown in Fig. 2.
The reaction base member 2 is heated by heating means 4 that will be described later, and the surfaces of the reaction base member are heated to a temperature suited for reducing the chlorosilane with hydrogen, e.g., at 800 to 1700°C and, preferably, 1200 to 1400°C or higher. Here, the reaction base member 2 comes in contact with the formed chlorosilane compounds and the molten silicon and is, therefore, desirably made of a material such as a graphite member that withstands the temperature conditions and the materials that come in contact therewith. The size of the reaction base member 2 may be suitably set depending on the object, and may be set by taking the reaction efficiency and production efficiency into account.

### <Heating means 4>

As the heating means 4, any known means can be used without special limitation provided it is capable of heating and adjusting the surfaces of the reaction base member 1 at a temperature of 1000 to 1700°C and, preferably, 1200 to 1400°C or higher. As a concrete heating means, there can be exemplified an infrared heating system in addition to the high frequency induction heating system shown in Fig. 2. Usually, the heating means has a cooling means such as a structure of flowing water in the coil. In the case of the high frequency induction heating system, a heat-insulating member or the like is preferably interposed between the reaction base member 1 and the heating means 4 by taking the heating efficiency and the like into consideration.

### <Feed gas feed pipe 5>

The feed gas feed pipe 5 is opening from the upper part toward the lower part of the reaction portion 3 that is surrounded by the inner wall of the reaction base member 1, and feeds a mixed gas of chlorosilane compounds and hydrogen, that is the feed gas, to the reaction portion 3. It is desired that the inner wall of the pipe is cooled down to a temperature lower than the reaction temperature so that the feed gas feed pipe is not heated by the heat conducting from the reaction portion 3 and that the reaction does not take place in the pipe. Any type of cooling means can be used provided it is capable of achieving the above object. Though not shown, there may be employed a system of using the feed gas feed pipe of a water-cooling jacket structure having a nozzle of double tubes or more tubes, and feeding the chlorosilane compounds from the center portion thereof.

### <Gas discharge tube 6>

The gas discharge tube 6 is continuous to and joined to the reaction base member 2, recovers the gas after the reaction discharged from the reaction portion 3, permits the gas to stay, discharges the gas after the reaction out of the reaction system, and is communicated with the reaction gas-cooling system and the treatment systems.
The temperature of the gas after the reaction flowing in the gas discharge pipe is not specifically limited and can be adjusted but is, desirably, maintained at a temperature at which at least the Si₂OCl₆ contained in the gas after the reaction that will be described later is not liquefied, and is maintained at least not lower than 80°C and, preferably, not lower than 130°C.

### <Detector device 12>

The detector device is basically constituted by a detector portion for collecting the vent gas after the reaction and a detector that determines the Si₂OCl₆ which is a component in the collected vent gas. To continuously conduct the detection, a collection means is provided as required so as to work as the detection portion, and the collected vent gas is introduced into the detector. For instance, provision is made of a coupling pipe such as a tube of a small diameter, a heat-insulating means or a heating means for maintaining the vent gas in a gaseous state, or a cooling means for condensing the vent gas into a liquid state, and the vent gas is collected in a gaseous state or in a liquid state and is sent to the detector connected through the coupling pipe so as to be quantitatively analyzed. It is also allowable to employ a batchwise detection system. In this case, the vent gas collected in a gaseous or liquid state in the detection portion is quantitatively analyzed by a detector that is separately provided.

### <Method of detecting the leakage of water>

Water that may happen to leak from the water-cooling portion in the metallic sealed container 1, in the heating means 4 or in the feed gas feed pipe 5 readily undergoes the reaction to produce silica, hydrogen chloride or any other specific reaction product in the gas after the reaction discharged from the reaction portion 3.
The present invention does not specifically limit the gas that is to be measured if it is the gas after the reaction, and the gas in the reaction vessel may be measured. Due to the structure of the apparatus, however, it is recommended to measure the gas flowing in the gas discharge pipe; i.e. , Si₂OCl₆ contained in the gas after the reaction discharged through the gas discharge pipe 6 is detected to know a change in the concentration thereof.
There is no specific limitation on the method of measuring the Si₂OCl₆ concentration. As the detector 7, there can be used an infrared spectroscopic analyzer or a chromatographic apparatus. Of them, a gas chromatography is desirably used since it is easy and can correctly detect a change in the concentration. Figs. 1, 2 and 3 concretely show the methods of sampling the gas that is to be measured.

### Sampling method 1:

The gas after the reaction flowing through the gas discharge pipe 6 is partly branched by the detection portion, passed through a small-diameter tube 8 for collection which is thermally insulated or heated to be higher than a predetermined temperature so that the Si₂OCl₆ contained in the gas after the reaction is not liquefied, and is partly collected in the gaseous state.
Fig. 2 shows an embodiment where the gas is maintained in the gaseous state with its temperature being maintained by the heat-insulating member 10. The detector 7 such as gas chromatography is coupled to the detector portion through the tube 8 of a small diameter, and the collected gas can be continuously analyzed.
The temperature maintained or heated by the small-diameter tube 8 for collection is suitably determined depending upon the partial pressure of the Si₂OCl₆ contained in the gas. The small-diameter tube 8 may assume any temperature if the Si₂OCl₆ contained in the gas is not liquefied but, usually, assumes the temperature of not lower than 80°C and, desirably, not lower than 130°C. The detector portion is a place for collecting the sample. The sample may be sent to the detector connected to the detector portion so as to be continuously measured or may be measured batchwise by using a separate detector.

### Sampling method 2:

The gas after the reaction is connected to a cooling device that cools the temperature down to not higher than a predetermined temperature in order to liquefy the Si₂OCl₆ contained in the gas after the reaction in part or whole of the gas after the reaction flowing through the gas discharge pipe 6. The vent gas may be wholly cooled to liquefy the Si₂OCl₆ contained therein. When the detection of the present invention only is to be conducted, however, an embodiment is desired in which the gas is partly collected and the Si₂OCl₆ contained therein is liquefied.
The Si₂OCl₆ contained in the gas after the reaction is liquefied and is collected in the detector portion. Thereafter, the collected liquid is poured into the gas chromatography that is the detector 7 and is analyzed. The cooling means may assume any embodiment if the Si₂OCl₆ contained the gas can be liquefied and recovered. However, the temperature for cooling the gas in the cooling apparatus is, usually, not higher than -30°C and, desirably, not higher than -50°C.

### Method of measuring the concentration:

There is no special limitation on the method of separating the Si₂OCl₆ from other components by the gas chromatographic method. As concrete gas chromatographic conditions, the column is a packed column made of a glass having a high chemical stability, and the filler is desirably the one obtained by adding a silicone oil to a diatomaceous carrier that contains silica as a chief component. The carrier gas is, desirably, helium, argon or nitrogen which is inert to the gas that is to be measured. The quantitative analysis is carried out by using a standard sample of Si₂OCl₆ of a known concentration, by preparing a calibration curve from the respective peak areas in advance, and by taking measurement the samples.

### <Method of producing polycrystalline silicon>

Any known method can be employed without limitation for producing the polycrystalline silicon based on the melt deposition method by using the chlorosilane/hydrogen reductively reacting apparatus shown in Fig. 2. The amounts of feeding the trichlorosilane and hydrogen, the ratio of feeding them, the temperature of the reaction portion, the amount of feeding the cooling water, the temperature thereof and other concrete conditions have been closely described in Japanese Patent No. 4,038,110, Japanese Patent No. 4,064,918, Japanese Patent No. 4, 157, 281 and Japanese Patent No. 4, 290, 647, and may be suitably determined by making reference to them.
In the chlorosilane/hydrogen reductively reacting apparatus, the reaction is conducted for reducing the chlorosilane with hydrogen, and the gas after the reaction is analyzed by the above-mentioned detection method to determine the amount of water contained in the vent gas. The water that is detected stems from the leaked cooling water and the water contained in the feed gas.
When the concentration of Si₂OCl₆, i.e., the amount of water is smaller than a specified value as a result of determination, the operation is regarded to be in a steady-state condition and the production is continued. The specified value is suitably determined depending upon the standard of the produced polycrystalline silicon and the quality of the chlorosilane compounds.

When the concentration of Si₂OCl₆, i.e., the amount of water has increased to exceed the specified value or a change in the concentration obviously proves the occurrence of abnormal condition such as leakage of water, it is most desired to readily discontinue the reaction. Here, the discontinuation of reaction means that the reaction for reducing the chlorosilane with hydrogen is discontinued. Concretely, there can be exemplified a method which discontinues the heat control such as high frequency induction heating effected by using the heating means 4 or adjusts the heat control to lie in a temperature region in which the reaction discontinues, or a method which discontinues the supply of chlorosilane compounds from the feed gas feed pipe 5.
There is no specific limitation on the method of transmitting the data concerned to the measurement of Si₂OCl₆ concentration to the production section, and the data may be transmitted on line or off line.
In the Siemens method shown in Fig. 1, too, the amount of water is measured in the same manner as in the above melt deposition method, and the production is controlled based on the obtained values.

### EXAMPLES

The invention will now be concretely described by way of Examples to which only, however, the invention is in no way limited. Further, it does not mean that the combinations of features described in the Examples are all essential for the means of solving problems of the invention.

### Example 1.

The invention will be described with reference to the schematic view of Fig. 2.
A cylindrical container made of isotropic graphite was installed as the reaction base member 2 in the metallic (stainless steel) sealed container 1 having a water-cooling jacket structure. Further, as the heating means 4, a high frequency induction heating coil was installed, and the cooling water was flown in the coil.
By using the chlorosilane/hydrogen reductively reacting vessel of the above-mentioned structure, the heating output of the high frequency induction heating coil was so controlled that the surface temperature of the reaction base member 2 was 1300 to 1400°C, a mixed gas (1100 Nm³/h in total) of trichlorosilane, 100 Nm³/h and hydrogen, 1000 Nm³/h was fed from the feed gas feed pipe 5 to start the reaction, and a solid silicon was deposited on the inner surfaces of the reaction base member 2. The pressure in the sealed container was about 50 kPaG.
In the above reductive reaction of the trichlorosilane, the temperature of the gas immediately after the reaction portion 3 was about 1100°C and the temperature of the gas in the gas discharge pipe 6 was about 800°C.
On the other hand, the vent gas after the reaction flowing through the gas discharge pipe 6 of the reaction vessel was partly collected in a gaseous state through the small-diameter tube 8 of *φ* 8 mm for collection heated at a temperature of 110°C so that the Si₂OCl₆ contained in the gas after the reaction was not liquefied, and the concentration of Si₂OCl₆ in the gas was measured by the gas chromatography.
In the above steady-state operation, the concentration of Si₂OCl₆ in the vent gas to be measured was measured by the gas chromatography. By presuming the case of water leakage from the closed container, further, water was caused to infiltrate into the closed container at a rate of 20 cc/h, and the concentration of Si₂OCl₆ in the vent gas was measured by the gas chromatography. Next, the amount of infiltrating water was changed stepwise like 100 cc/h and 400 cc/h, and the concentration of Si₂OCl₆ in the vent gas was similarly measured.
Table 1 shows the results of analysis. From the results, a correlation is confirmed between the amount of water infiltrated and the concentration of Si₂OCl₆. In taking the above measurement, no change was confirmed in the temperature or the pressure of the gas in the reaction vessel, from which it was learned that checking these matters was not effective in detecting the infiltration of small amounts of water. It was, on the other hand, learned that the detection method of the present invention is capable of accurately detecting the infiltration of even very small amounts of water.
After the reaction by adding water, the chlorosilane/hydrogen reductively reacting vessel was opened to make sure the deposition of silica on the inner surface wall of the metallic sealed container and on the inside of the gas discharge pipe.

### Comparative Examples 1 and 2.

Concentrations of the objects were measured in the steady state operation while mixing water thereto in the same manner as in Example 1 but changing the object in the gas to be measured from the Si₂OCl₆ into the Si₂Cl₆ and HCl. The results were as shown in Table 1.

**Table 1**

| | Ex. 1 | Comp. Ex. 1 | Comp. Ex. 2 |
|---|---|---|---|
| Amount of water fed cc/h | Si₂OCl₆ concentration in gas mol% | Si₂Cl₆ concentration in gas mol% | HCl concentration in gas mol% |
| 0 | (0.01 or less) not detected | 0.01 | 2.99 |
| 20 | 0.04 | 0.02 | 2.89 |
| 100 | 0.21 | 0.01 | 3.03 |
| 400 | 0.87 | 0.02 | 3.15 |

From the results of Table 1, a clear correlation was recognized between the amount of water leakage (infiltrating amount) and the concentration of Si₂OCl₆. On the other hand, no correlation was recognized between the water and the concentration of Si₂Cl₆ and correlation was ambiguous between the water and the HCl concentration, either, indicating that they are not useful when the water is leaking in very small amounts.

### Operation Example.

Water was caused to infiltrate into the sealed container at a rate of 20 cc/h assuming that water has leaked from the sealed container during the operation of depositing the solid silicon according to Example 1.
Here, the gas after the reaction flowing through the gas discharge pipe 6 was partly branched through the small-diameter tube 8 of *φ* 8 mm for collection heated at a temperature of 110°C so that the Si₂OCl₆ contained in the gas after the reaction was not liquefied, and the concentration of Si₂OCl₆ in the gas was measured by the gas chromatography for every 10 minutes.
A rise in the concentration of Si₂OCl₃ contained in the gas after the reaction was confirmed after 30 minutes have passed from the infiltration of water. Therefore, feed of water was discontinued, heating output of the high frequency induction heating coil which is the heating means 4 was discontinued, and feed of trichlorosilane, 100 Nm³/h from the feed gas feed pipe 5 was discontinued to discontinue the reaction. Thereafter, the reaction vessel was opened to make sure the formation of no by-products such as silica on the inner wall surface of the sealed container or on the inside of the gas discharge pipe, preventing the formation of by-products in advance.

### Brief Description of Reference Numerals:

- 1: metallic sealed container
- 2: reaction base member
- 3: reaction portion
- 4: heating means
- 5: feed gas feed pipe
- 6: gas discharge pipe
- 7: detector
- 8: small-diameter tube
- 9: cooling device
- 10: heat-insulating member
- 11: reaction vessel
- 12: gas detector device

## Claims

1. In the chlorosilane/hydrogen reductive reaction by introducing a feed gas containing chlorosilane compounds and hydrogen into a reaction portion formed in a reaction vessel having a water-cooling means to react them, a method of detecting the leakage of water by measuring the concentration of Si₂OCl₆ contained in the gas after the reaction, and detecting the leakage of water into the reaction vessel depending on a change in the measured concentration.

2. The method of detecting the leakage of water according to claim 1, wherein the chlorosilane compound is a trichlorosilane and the object product of the reductive reaction is a polycrystalline silicon.

3. The method of detecting the leakage of water according to claim 1, wherein the chlorosilane compound is a tetrachlorosilane and the object product of the reductive reaction is a trichlorosilane.

4. In producing a polycrystalline silicon by the reductive reaction of the chlorosilane compounds with hydrogen in a reaction portion formed in a reaction vessel having a water-cooling means, a method of producing a polycrystalline silicon by measuring the concentration of Si₂OCl₆ contained in the vent gas discharged from the reaction vessel, and detecting the leakage of water into the reaction vessel depending on a change in the measured concentration to thereby control the reductive reaction.

5. A chlorosilane/hydrogen reductively reacting apparatus having therein a reaction portion in which the chlorosilane compounds are reacted with hydrogen, and comprising a feed gas feed means for feeding a feed gas that contains the chlorosilane compounds and hydrogen, a gas discharge means for discharging the gas after the reaction, and a reaction vessel having a water-cooling means, the chlorosilane/hydrogen reductively reacting apparatus further comprising a detector device for measuring the concentration of Si₂OCl₆ present in the reaction vessel or in the gas discharge means.

6. The chlorosilane/hydrogen reductively reacting apparatus according to claim 5, wherein said gas discharge means includes a heat-insulating means or a heating means which collects part of the vent gas and holds it at not lower than 80°C to maintain it in a gaseous state, and a detector portion of the detector device that detects the concentration of Si₂OCl₆ is provided in the gaseous phase maintained in the gaseous state.

7. The chlorosilane/hydrogen reductively reacting apparatus according to claim 5, wherein said gas discharge means includes a cooling means which collects part of the vent gas and cools it down to not higher than -30°C to condense it, and a detector portion of the detector device that detects the concentration of Si₂OCl₆ is provided in the condensed liquid phase obtained by the condensation.

8. The chlorosilane/hydrogen reductively reacting apparatus according to claim 5, wherein the chlorosilane compound is a trichlorosilane and the object product of the reductive reaction is a polycrystalline silicon.
